# EUROPÄISCHE PATENTSCHRIFT

(11) **EP 0 660 663 B1**
(45) Veröffentlichungstag und Bekanntmachung des Hinweises auf die Patenterteilung: **14.02.1996**
(21) Anmeldenummer: 94920926.6
(22) Anmeldetag: 13.06.1994
(51) Int. Cl.: A01K 1/06, A01K 11/00, A01K 1/00

(54) **VORRICHTUNG ZUR TIERSORTIERUNG**
ANIMAL-SORTING DEVICE
DISPOSITIF POUR TRIER DES ANIMAUX

(30) Priorität: 26.08.1993 DE 4328666
(43) Veröffentlichungstag der Anmeldung: 05.07.1995
(73) Patentinhaber: Westfalia Separator AG, D-59302 Oelde (DE)
(72) Erfinder: LÖHER, Ulrich, D-59302 Oelde (DE)
(86) Internationale Anmeldenummer: EP9401915
(87) Internationale Veröffentlichungsnummer: WO9505735

(56) Entgegenhaltungen:
- EP-A- 0 499 428
- GB-A- 2 053 343

## Beschreibung

Die Erfindung betrifft eine Vorrichtung zur Tiersortierung, bei dem die zu sortierenden Tiere mittels eines ersten elektronischen Identifikationssystemes erkannt und eine nachfolgende Sortierweiche entsprechend der vorgegebenen Sortiermerkmale verstellt wird und dadurch den Weg freigibt zu einem von mindestens zwei Ausgängen.

Eine derartige Vorrichtung ist beispielsweise bekannt aus der EP 0 499 428 A1. Es hat sich gezeigt, daß es bei schnell durchlaufenden Tieren oder Tierketten zu Fehlsortierungen kommen kann, weil die Sortierweiche nicht schnell genug verstellt werden kann. Dadurch wird auch der Durchsatz der Tiere gehemmt.

Der Erfindung liegt die Aufgabe zugrunde, eine Vorrichtung zu schaffen, die auch bei großem Andrang von Tieren eine sichere und schnelle Sortierung gewährleistet.

Diese Aufgabe wird dadurch gelöst, daß der Sortierweiche im Eingangsbereich ein Sperrtor vorgelagert ist, das in Abhängigkeit von einem durch ein zweites Identifikationssystem erfaßten Sortiermerkmal in eine Sperrstellung und eine Öffnungsstellung bewegbar ist.

Das Sperrtor ist in der Regel geschlossen und wird erst geöffnet, nachdem das zulaufende Tier von dem ersten Identifikationssystem erkannt und die Sortierweiche entsprechend verstellt wurde. Dadurch wird eine sichere Sortierung erreicht. Meldet das zweite Identifikationssystem den Durchlauf von Tieren mit gleichen Sortiermerkmalen, so wird das Sperrtor erst dann wieder geschlossen, wenn ein Tier mit einem abweichenden Sortiermerkmal erkannt wird. Da das Sperrtor in diesem Fall nur gelegentlich geschlossen werden muß, wird ein schneller Durchlauf der Tiere erreicht.

Eine rechtzeitige Schließung des Sperrtores kann dadurch erreicht werden, daß das zweite Identifikationssystem mit ausreichendem Abstand im Eingangsbereich vor dem ersten Identifikationssystem vorgesehen ist. Dieser Abstand beträgt bei einer vorteilhaften Ausgestaltung mindestens 2 Meter. Um einen zügigen Durchlauf zu gewährleisten, sollte der Abstand 8 Meter nicht überschreiten.

Bei einer weiteren vorteilhaften Ausgestaltung sind mehrere Sortierweichen mit ihnen zugeordneten Ausgängen vorgesehen. Dadurch wird eine Selektion der Tiere in mehr als zwei Gruppen ermöglicht.

Das Vorkommando für die Stellung des Sperrtores kann auch aus anderen Bereichen mit Tierbelegung kommen, z. B. aus der augenblicklichen Belegung eines Melkstandes.

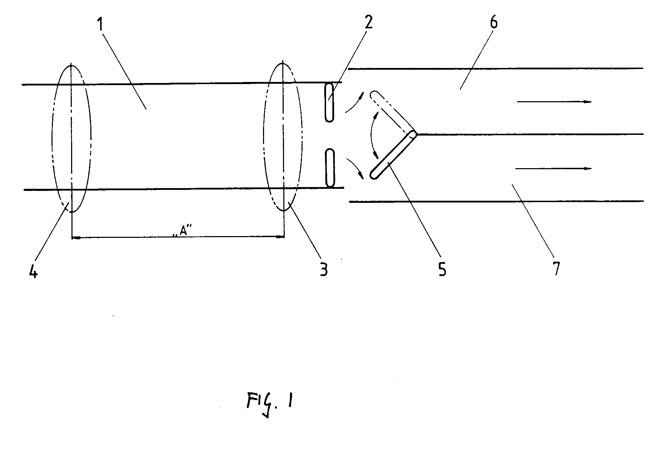

Ein Ausführungsbeispiel der Erfindung ist in der Zeichnung dargestellt und wird nachstehend näher erläutert.

In der Fig. ist eine Vorrichtung zur Tiersortierung schematisch dargestellt. Mit 1 ist der Eingangsbereich bezeichnet, in dem ein Sperrtor 2, ein erstes Identifikationssystem 3 und ein zweites Identifikationssystem 4 vorgesehen ist. Der Abstand "A" zwischen den beiden Identifikationssystemen 3 und 4 beträgt ca. 2 bis 8 Meter. In Durchlaufrichtung hinter dem Sperrtor 2 befindet sich eine Sortierweiche 5, die wahlweise einen der Ausgänge 6 und 7 absperrt und den anderen dabei freigibt.

Das zweite Identifikationssystem 4 erkennt das in den Eingangsbereich 1 eintretende Tier und vergleicht das erkannte Merkmal mit dem des zuvor detektierten Tieres. Solange die Merkmale identisch sind bleibt das Sperrtor 2 geöffnet. Wird ein Tier mit abweichendem Merkmal erkannt, schließt das Sperrtor 2. Dieses Tier wird dann durch das erste Identifikationssystem 3 identifiziert, das eine entsprechende Stellung der Sortierweiche 5 veranlaßt. Erst danach wird das Sperrtor 2 wieder solange geöffnet, bis das zweite Identifikationssystem 4 ein Tier mit abweichenden Merkmal meldet. Während dieser Phase können die Tiere die Sortiereinrichtung schnell passieren, ohne eine Fehlsortierung zu riskieren. Wenn sich die Tiere schon in einem anderen Bereich des Stalles sortiert aufhalten, so kann das Vorkommando aus diesem Bereich verwendet werden, um die Stellung des Sperrtores 2 zu beeinflussen.

## Patentansprüche

1. Vorrichtung zur Tiersortierung, bei dem die zu sortierenden Tiere mittels eines ersten elektronischen Identifikationssystemes (3) erkannt und eine nachfolgende Sortierweiche (5) entsprechend der vorgegebenen Sortiermerkmale verstellt wird und dadurch den Weg freigibt zu einem von mindestens zwei Ausgängen (6, 7), **dadurch gekennzeichnet**, daß der Sortierweiche (5) im Eingangsbereich (1) ein Sperrtor (2) vorgelagert ist, das in Abhängigkeit von einem durch ein zweites Identifikationssystem (4) erfaßten Sortiermerkmal in eine Sperrstellung und eine Öffnungsstellung bewegbar ist.

2. Vorrichtung nach Anspruch 1, dadurch gekennzeichnet, daß das zweite Identifikationssystem (4) im Eingangsbereich (1) vor dem ersten Identifikationssystem (3) angeordnet ist.

3. Vorrichtung nach Anspruch 1 oder 2, dadurch gekennzeichnet, daß der Abstand "A" zwischen den beiden Identifikationssystemen (3, 4) minimal 2 Meter beträgt.

4. Vorrichtung nach Anspruch 1 oder 2, dadurch gekennzeichnet, daß der Abstand "A" zwischen den beiden Identifikationssystemen (3, 4) maximal 8 Meter beträgt.

5. Vorrichtung nach einem der Ansprüche 1 bis 4, dadurch gekennzeichnet, daß mehrere Sortierweichen (5) mit ihnen zugeordneten Ausgängen (6, 7) vorgesehen sind.

6. Vorrichtung nach Anspruch 1, dadurch gekennzeichnet, daß das zweite Identifikationssystem (4) in unterschiedlichen Bereichen mit Tierbelegung vorgesehen ist.

## Claims

1. Device for animal segregation by means of which the animals to be segregated are identified by means of a first electronic identification system (3) and a following segregating gate is switched according to the specified segregation criteria thereby opening up the way to one of at least two exits (6, 7), **characterised in that** the segregating gate is preceded by a barrier gate (2) in the entrance area (1) which can be moved into a closed position and an open position as a function of the segregation criteria identified by a second identification system (4).

2. Device according to claim 1, **characterised in that** the second identification system (4) is located before the first identification system (3) in the entrance area (1).

3. Device according to claim 1 or 2, **characterised in that** the distance "A" between the two identification systems (3, 4) is at least 2 metres.

4. Device according to claim 1 or 2, **characterised in that** the distance "A" between the two identification systems (3, 4) is maximum 8 metres.

5. Device according to one of the claims 1 to 4, **characterised in that** several segregating gates (5) are provided with their allocated exits (6, 7).

6. Device according to claim 1, **characterised in that** the second identification system (4) is located in different areas occupied by animals.

## Revendications

1. Dispositif de classification d'animaux à l'aide duquel les animaux à classifier sont identifés par un premier système électronique de classification (3) et dans lequel une porte de sélection (5) montée en aval est positionnée en fonction des paramètres de classification prédéterminés, pour ainsi ouvrir le passage vers l'une d'au moins deux sorties (6, 7), **caractérisé en ce que** la porte de sélection (5) est précédée d'une porte de barrage installée dans la zone d'entrée, pouvant être amenée dans une position d'ouverture et dans une position de fermeture, en fonction d'un paramètre de classification saisi par un deuxième système d'identification (4).

2. Dispositif selon revendication 1, caractérisé en ce que le deuxième système d'identification (4) installé dans la zone d'entrée est disposé en amont du premier système d'identification (3).

3. Dispositif selon revendication 1 ou 2, caractérisé en ce que la distance "A" entre les deux systèmes d'identification (3, 4) est d'au moins 2 mètres.

4. Dispositif selon revendication 1 ou 2, caractérisé en ce que la distance "A" entre les deux systèmes d'identification (3, 4) est d'au maximum 8 mètres.

5. Dispositif selon l'une des revendications 1 à 4, caractérisé en ce que plusieurs portes de sélection (5) sont prévues et reliées aux sorties correspondantes (6, 7).

6. Dispositif selon revendication 1, caractérisé en ce que le deuxième système d'identification (4) est prévu dans des zones différentes occupées de vaches.
